Europäisches Patentamt

European Patent Office

Office européen des brevets

(11) Veröffentlichungsnummer: **0 244 645**

**A1**

(12) # EUROPÄISCHE PATENTANMELDUNG

(21) Anmeldenummer: 87104999.5

(22) Anmeldetag: 03.04.87

(51) Int. Cl.4: **B23B 39/02** , B23Q 1/04

(30) Priorität: 29.04.86 DE 8611728 U

(43) Veröffentlichungstag der Anmeldung:
**11.11.87 Patentblatt 87/46**

(84) Benannte Vertragsstaaten:
**AT BE CH DE ES FR GB GR IT LI LU NL SE**

(71) Anmelder: **Friedrich Deckel
Aktiengesellschaft
Plinganserstrasse 150
D-8000 München 70(DE)**

(72) Erfinder: **Geiger, Michael
Ina-Seidel-Weg 8
D-8130 Starnberg(DE)**

(54) **Bohr- und Fräsmaschine mit einem zwei rotatorische Achsen aufweisenden Werkstücktisch.**

(57) Bei einer Bohr-und Fräsmaschine mit wenigstens einer Werkzeugspindel (7) und einem Werkstücktisch, welcher eine am Maschinenkörper (2) befestigbare Konsole (10), einen daran um eine rechtwinklig zur Spindelachse stehende Schwenkachse (14) schwenkbaren Tischsockel (18) und eine am Tischsockel (18) um eine rechtwinklig zur Schwenkachse (14) stehende Drehachse (22) drehbare Tischplatte (20) mit einer zur Drehachse (22) rechtwinklig angeordneten Aufspannfläche (26) umfaßt, ist an der Konsole (10) ein um die Schwenkachse (14) schwenkbarer Zwischenträger (12) angeordnet, an welchem der Tischsockel (18) in einer senkrecht zur Schwenkachse (14) liegenden Verschieberichtung (17) verschiebbar gelagert ist.

Diese Anordnung ermöglicht eine Lagerung -
schwerer Werkstücke (24) in der Weise, daß deren Gewicht im wesentlichen in der Schwenkachse (14) liegt, wodurch einerseits große Momente um die Schwenkachse (14) und damit einhergehende Positionierungenauigkeiten, andererseits ein großer Schwenk-und Kollisionsfreiraum vermieden werden.

## Bohr-und Fräsmaschine mit einem zwei rotatorische Achsen aufweisenden Werkstücktisch

Die Erfindung betrifft eine Bohr-und Fräsmaschine der im Oberbegriff des Anspruches 1 genannten Art.

Die Ausstattung eines Werkstücktisches mit zwei rotatorischen Achsen ermöglicht eine sogenannte 5-Seitenbearbeitung von Werkstücken. Der Tischsockel enthält im allgemeinen die Elemente zur Lagerung und für den Drehantrieb der Tischplatte. Außerdem sind am Tischsockel auch die Lagerungselemente für die Schwenklagerung des Tischsockels gegenüber der Konsole angeordnet. Die Schwenkachse hat damit im allgemeinen einen erheblichen Abstand von der Aufspannfläche der Tischplatte. Dadurch ergeben sich insbesondere bei der Bearbeitung schwerer Werkstücke große Momente um die Schwenkachse, die entweder Positionierungenauigkeiten zur Folge haben oder eine sehr solide, teuere Lagerung erforderlich machen. Der Versuch, die Schwenkachse näher zur Aufspannfläche zu bringen, führt dazu, daß der Schwenkraum, innerhalb dessen das Werkstück kollisionsfrei bewegt werden kann, verkleinert wird, woraus sich letztlich eine Begrenzung der bearbeitbaren Werkstückgröße ergibt.

Bei modernen Bohr-und Fräsmaschinen sind sowohl die Schwenkachse als auch die Drehachse im allgemeinen motorisch betrieben und durch eine zentrale Maschinensteuerung angesteuert. Jeder dieser Achsen ist dann ein Meßsystem zugeordnet, welches im allgemeinen aus einem kreisbogenförmig um die entsprechende Achse herum angeordneten Maßstab und einem Lesekopf besteht. Bei den bekannten Anordnungen ergibt sich dann im allgemeinen ein weiterer Nachteil daraus, daß diese Meßeinrichtungen relativ weit von der Bearbeitungszone, das ist der Bereich des Werkzeugeingriffes in das Werkstück, entfernt ist, so daß sich ein Meßfehler des Meßsystems im Verhältnis dieses Abstandes vergrößert.

Bei einer bekannten Bohr-und Fräsmaschine der im Oberbegriff des Anspruches 1 genannten Art ist in einer mit dem Maschinenkörper verbindbaren Konsole ein Tischsockel um eine horizontale Achse schwenkbar gelagert (DE-OS 2 328 439). Auf dem Tischsockel ist eine um eine vertikale Drehachse drehbare Tischplatte gelagert. Die Drehachse und die Schwenkachse schneiden sich nicht. Ein auf der Tischplatte befestigtes Werkstück hat einen erheblichen Abstand von der Schwenkachse, so daß sich die oben beschriebenen Nachteile bezüglich der Positioniergenauigkeit bzw. des Lagerungs-und Antriebsaufwandes ergeben. Eine Versetzung der Schwenkachse in Richtung zur Aufspannfläche bedeutet, daß die Konsolenstruktur ebenfalls bis etwa in die Ebene der Aufspannfläche hochgezogen werden muß, wodurch der kollisionsfreie Schwenkraum für die Tischplatte und das darauf befindliche Werkstück eingeschränkt wird. Fehler des im Bereich der Schwenkachse angeordneten Meßsystems vergrößern sich mit zunehmendem Abstand von dieser Schwenkachse, so daß in verschiedenen Bereichen des Werkstückes unterschiedliche Fehler auftreten, die deshalb nicht oder nur schwer zu kompensieren sind.

Es ist die Aufgabe der vorliegenden Erfindung, eine Bohr-und Fräsmaschine der im Oberbegriff des Anspruches 1 genannten Art zu schaffen, bei der der Werkstücktisch auch bei Aufnahme - schwerer Werkstücke mit hoher Positioniergenauigkeit bei verhältnismäßig geringem Lagerungs-und An triebsaufwand positionierbar ist, bei welcher der kollisionsfreie Raum zur Aufnahme von Werkstücken groß ist und bei welcher eine geometrische Vergrößerung von Fehlern des Meßsystems gering gehalten wird bzw. wenigstens teilweise kompensierbar ist.

Diese Aufgabe ist erfindungsgemäß durch die im Kennzeichen des Anspruches 1 genannten Merkmale gelöst.

Der Tischsockel ist nicht unmittelbar - schwenkbar an der Konsole befestigt, sondern über einen Zwischenträger. Dieser Zwischenträger ermöglicht durch eine bestimmte, weiter unten näher erläuterte Formgebung eine weitgehend freie gegenseitige Anordnung der Schwenk-und Drehachse derart, daß einerseits insbesondere beim Schwenkvorgang geringe Schwenkkräfte auftreten, so daß die Schwenklagerung und der Schwenkantrieb verhältnismäßig leicht dimensioniert werden können, ohne daß darunter die Schwenkpositioniergenauigkeit leidet; andererseits ermöglicht der Zwischenträger auch eine Bauweise mit einem großen, kollisionsfreien Schwenkraum für das Werkstück. Die weitgehend freie Wahl der gegenseitigen Anordnung ermöglicht es außerdem, den Ort der Ablesung des Meßsystems so zu legen, daß dieser nahe bei der Bearbeitungszone liegt, so daß eine geometrische Fehlervergrößerung weitgehend vermeidbar ist. Außerdem kann durch die verschiebbare Anordnung des Tischsockels auf dem Zwischenträger eine Korrektur der Bearbeitungszone derart vorgenommen werden, daß diese stets in der Nähe des Meßsystems liegt.

In einer bevorzugten Ausgestaltung der Erfindung ist vorgesehen, daß die Werkzeugspindel eine Horizontalspindel ist und daß die Schwenkachse vertikal ausgerichtet ist. Wegen der vertikalen Ausrichtung der Schwenkachse sind beim Schwenken keine Hebe-bzw. Senkbewegungen erforderlich, so daß auch insofern der Antriebsaufwand für die Schwenkbewegung gering gehalten werden kann.

Der Zwischenträger ist in weiterer Ausgestaltung der Erfindung als bezüglich der Schwenkachse radial nach außen geneigter Ausleger ausgebildet. Die Anordnung und Form des Auslegers ist so gewählt, daß die Aufspannfläche der Tischplatte etwa in eine die Schwenkachse enthaltende Ebene fällt.

Der Schwenkbereich des Zwischenträgers beträgt, ausgehend von einer Mittellage, wenigstens 180°, vorzugsweise jedoch mehr als 180°, wie anhand des Ausführungsbeispieles noch näher erläutert wird. Der Drehbereich der Tischplatte um die Drehachse beträgt 360°. Mit dieser Anordnung kann eine 5-Seitenbearbeitung durchgeführt werden.

Die Schwenkachse und die Drehachse sind in weiterer Ausgestaltung der Erfindung vorzugsweise als gesteuerte Achsen ausgebildet, während der Tischsockel am Zwischenträger lediglich manuell verschiebbar und fixierbar angeordnet ist.

In weiterer Ausgestaltung der Erfindung ist vorgesehen, daß die Drehachse der Tischplatte etwa auf der Höhe der Werkzeugspindel angeordnet ist.

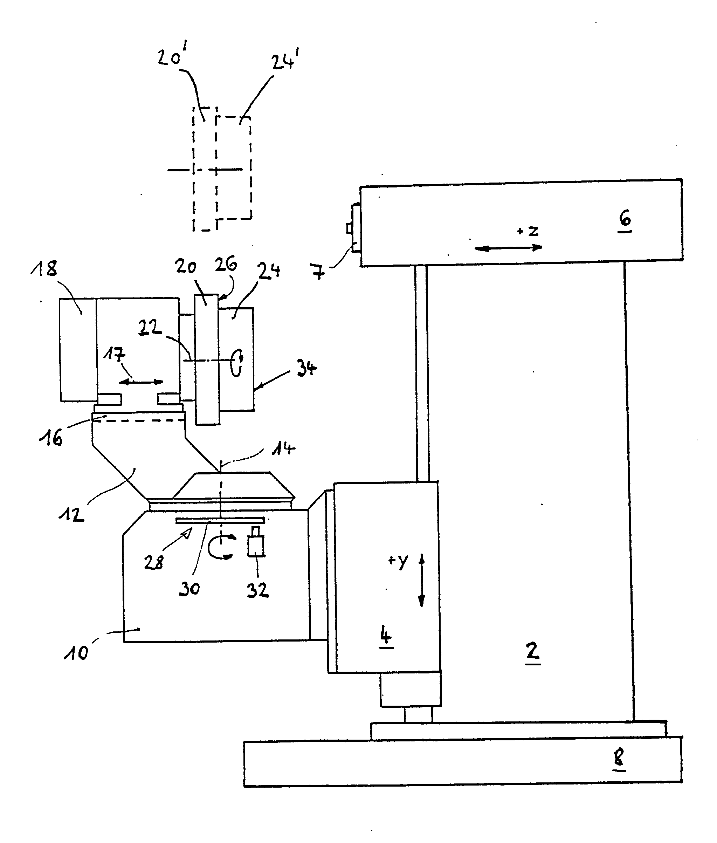

Ein Ausführungsbeispiel der Erfindung ist in der Zeichnung dargestellt und im folgenden näher beschrieben. Die Figur zeigt eine Universalbohr- und -fräsmaschine mit einer in Spindelachsenrichtung vorschubbeweglichen Horizontalspindel und einem Werkstücktisch mit einer vertikalen und einer horizontalen rotatorischen Achse sowie einer horizontalen Verschiebeachse.

An einem Maschinenkörper oder Maschinenständer 2 ist ein in Richtung der Y-Achse vorschubbeweglicher Support 4 angeordnet. Ein in Richtung der Z-Achse vorschubbeweglicher Spindelbock 6 ist auf der Oberseite des Maschinenkörpers 2 gelagert. Der Maschinenkörper 2 steht auf einem Maschinenfuß 8.

Am Support 4 ist eine in Z-Richtung auskragende Konsole 10 befestigt, an der ein Zwischenträger 12 um eine Schwenkachse 14 schwenkbar gelagert ist. Der Schwenkwinkel ist, ausgehend von der in der Figur dargestellten Mittelstellung, mehr als 90°, vorzugsweise zwischen 90 und 120° nach beiden Seiten.

Der Zwischenträger 12 ist bezogen auf die Schwenkachse 14 radial nach außen geneigt. An seinem oberen Ende weist er Längsführungen 16 auf, in denen ein Tischsockel 18 verschiebbar gelagert ist.

Am Tischsockel 18 ist eine Tischplatte 20 um eine Drehachse 22 drehbar angeordnet. Der Drehwinkel der Tischplatte beträgt jeweils 360° in beiden Drehrichtungen. Mit dieser Anordnung der Schwenkachse 14 und der Drehachse 20 läßt sich in bekannter und deshalb hier nicht näher beschriebener Weise eine sogenannte 5-Seitenbearbeitung eines auf der Tischplatte 20 aufgespannten Werkstückes 24 durchführen.

Wegen der Verschiebbarkeit des Supportes 4 in Y-Richtung kann das Werkstück 24 ebenfalls in Y-Richtung verfahren werden. Die größtmögliche Höhenlage der Tischplatte 20 und des Werkstückes 24 ist gestrichelt dargestellt und mit den Bezugzeichen 20', 24' bezeichnet. Durch eine Ausbildung des Supportes 4 als Kreuzschlitten ist ein verfahren des Werkstückes 24 auch in der senkrecht zur Zeichenebene stehenden X-Achse möglich, wie an sich bekannt und deswegen hier nicht näher beschrieben ist. Der Spindelbock 6 ist in Z-Richtung verfahrbar.

Durch die Neigung des Zwischenträgers 12 radial nach außen wird erreicht, daß die Aufspannfläche 26 der Tischplatte 20 in einer Grundstellung etwa in einer die Schwenkachse 14 enthaltenden Ebene liegt. Der Schwenkachse 14 ist ein Meßsystem 28 zugeordnet, welches beispielsweise aus einem kreisbogenförmig um die Schwenkachse 14 herum angeordneten Maßstab 30 und einem Ablesekopf 32 besteht. Durch eine Verstellung des Tischsockels 18 in Z-Richtung läßt sich erreichen, daß die zu bearbeitende Fläche, beispielsweise die Fläche 34, des Werkstückes 24 stets etwa in Flucht mit dem Ablesekopf 32 ist, so daß eine Meßfehlervergrößerung infolge eines großen Abstandes zwischen Meßort und Bearbeitungsort nicht vorkommen kann.

Die Bewegung des Zwischenträgers 12 um die Schwenkachse 14 sowie die Bewegung der Tischplatte 20 um die Drehachse 22 werden jeweils durch motorische Antriebe bewirkt, die beispielsweise von einer zentralen NC-Steuerung angesteuert werden. Die Verstellung des Tischsockels 18 in Z-Richtung sowie das Lösen und Spannen des Tischsockels in der Längsführung 16 erfolgt vorzugsweise manuell.

## Ansprüche

1. Bohr-und Fräsmaschine mit wenigstens einer Werkzeugspindel und einem Werkstücktisch, welcher eine am Maschinenkörper befestigbare Konsole, einen daran um eine rechtwinklig zur Spindelachse stehende Schwenkachse schwenkbaren Tischsockel und eine am Tischsockel um eine rechtwinklig zur Schwenkachse stehende Drehachse drehbare Tischplatte mit einer zur Drehachse rechtwinklig angeordneten Aufspannfläche umfaßt, dadurch **gekennzeichnet,** daß an der Konsole (10) ein um die Schwenkachse (14) schwenkbarer Zwischenträger (12) angeordnet ist, an welchem der Tischsockel (18) in einer senkrecht zur Schwenkachse (14) liegenden Verschieberichtung (17) verschiebbar gelagert ist.

2. Bohr-und Fräsmaschine nach Anspruch 1, dadurch **gekennzeichnet,** daß die Werkzeugspindel (7) eine Horizontalspindel ist und daß die Schwenkachse (14) vertikal ausgerichtet ist.

3. Bohr-und Fräsmaschine nach Anspruch 1 oder 2, dadurch **gekennzeichnet,** daß der Zwischenträger (12) als bezüglich der Schwenkachse (14) radial nach außen, vorzugsweise in Verschieberichtung (17) des Tischsockels (18) geneigter Ausleger gebildet ist.

4. Bohr-und Fräsmaschine nach einem der Ansprüche 1 bis 3, dadurch **gekennzeichnet,** daß der Schwenkbereich des Zwischenträgers (12) um die Schwenkachse (14), ausgehend von einer Mittelstellung, in der die Verschieberichtung (17) parallel zur Spindelachse liegt, wenigstens 90° in beiden Drehrichtungen beträgt.

5. Bohr-und Fräsmaschine nach Anspruch 4, dadurch **gekennzeichnet,** daß der Schwenkbereich des Zwischenträger zwischen 90° und 180°, vorzugsweise 90° und 120° in beiden Schwenkrichtungen beträgt.

6. Bohr-und Fräsmaschine nach einem der Ansprüche 1 bis 5, dadurch **gekennzeichnet,** daß der Drehbereich der Tischplatte (24) um die Drehachse (22) 360° beträgt.

7. Bohr-und Fräsmaschine nach einem der Ansprüche 1 bis 6, dadurch **gekennzeichnet,** daß die Schwenkachse (14) und die Drehachse (22) gesteuerte Achsen sind und daß der Tischsockel (18) vorzugsweise am Zwischenträger (12) manuell verschiebbar und fixierbar angeordnet ist.

8. Bohr-und Fräsmaschine nach einem der Ansprüche 1 bis 7, dadurch **gekennzeichnet,** daß die Aufspannfläche (26) der Tischplatte (20) bei einer mittleren Verschiebeposition des Tischsockels (18) etwa in einer die Schwenkachse (14) enthaltenden Ebene angeordnet ist.

9. Bohr-und Fräsmaschine nach einem der Ansprüche 2 bis 8, dadurch **gekennzeichnet,** daß die Drehachse (22) etwa auf der Höhe der Werkzeugspindel (7) angeordnet ist.

10. Bohr-und Fräsmaschine nach einem der Ansprüche 2 bis 8, dadurch **gekennzeichnet,** daß die Konsole (10) an einem vertikal am Maschinenkörper (2) verfahrbar gelagerten Support (4) angeordnet ist.

## EINSCHLÄGIGE DOKUMENTE

EP 87104999.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | GB - A - 1 470 556 (ACUSHNET) <br> * Fig. 1,2 * <br><br> -- | 1,2,4-9 | B 23 B 39/02 <br> B 23 Q 1/04 |
| A | GB - A - 1 395 912 (GLACHER) <br> * Gesamt * <br><br> -- | 1 | |
| A | DD - A - 130 214 (VEB) <br> * Fig. * <br><br> -- | 1,2,4-9 | |
| A | EP - A1 - 0 123 433 (MC LEAN) <br> * Gesamt * <br><br> ---- | | |

| RECHERCHIERTE SACHGEBIETE (Int. Cl 4) |
|---|
| B 23 B 35/00 |
| B 23 B 39/00 |
| B 23 C 1/00 |
| B 23 C 3/00 |
| B 23 Q 1/00 |
| B 23 Q 3/00 |

Der vorliegende Recherchenbericht wurde für alle Patentansprüche erstellt.

| Recherchenort | Abschlußdatum der Recherche | Prüfer |
|---|---|---|
| WIEN | 19-06-1987 | FUCHS |